(19) **Europäisches Patentamt**

**European Patent Office**

**Office européen des brevets**

(11) **EP 1 061 703 A2**

(12) **EUROPÄISCHE PATENTANMELDUNG**

(43) Veröffentlichungstag:
20.12.2000  Patentblatt 2000/51

(51) Int. Cl.[7]: **H04L 25/08**

(21) Anmeldenummer: **00111388.5**

(22) Anmeldetag: **26.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.06.1999 DE 19927587**

(71) Anmelder:
**Infineon Technologies AG**
**81541 München (DE)**

(72) Erfinder: **Hölzle, Josef**
**86825 Bad Wörishofen (DE)**

(74) Vertreter:
**Zedlitz, Peter, Dipl.-Inf. et al**
**Patentanwalt,**
**Postfach 22 13 17**
**80503 München (DE)**

(54) **Schaltungsanordnung zur Übertragung von Impulsen über eine Übertragungsstrecke**

(57)  Zur Übertragung von kurzen Impulsen über eine längere Übertragungsstrecke, beispielsweise innerhalb von integrierten Schaltungen, weist die erfindungsgemäße Schaltungsanordnung einen Frequenzteiler auf, an dessen Eingang die zu übertragenden Impulse (S1) anliegen und dessen Ausgang mit der Übertragungsstrecke (ÜS) verbunden ist. Weiterhin ist ein Frequenzvervielfacher vorgesehen, dessen Eingang mit der Übertragungsstrecke (ÜS) verbunden ist und an dessen Ausgang die übertragenen Impulse (S7, S9) anliegen.

FIG 5

**EP 1 061 703 A2**

## Beschreibung

Die Erfindung betrifft eine Schaltungsanordnung zur Übertragung von Impulsen über eine Übertragungsstrecke.

In der Digitaltechnik besteht häufig das Problem, kurze Impulse innerhalb von integrierten Schaltungen oder auch über Leiterbahnen von Platinen über längere Strecken zu übertragen. Je länger die Leitung, also die Übertragungsstrecke ist, desto stärker fällt deren Tiefpaßwirkung ins Gewicht, so daß kurze Impulse nurmehr stark gedämpft am Ende der Übertragungsstrecke abgreifbar sind. Diese Eigenschaft wirkt sich um so störender aus, je kürzer die Impulse sind.

Um den Impuls dennoch sauber zu übertragen, besteht die Möglichkeit, die Treiberleistung entsprechend hoch zu dimensionieren. Mit einer entsprechend hohen Treiberleistung läßt sich die Kapazität der Übertragungsstrecke genügend schnell umladen. Eine ungenügend hohe Treiberleistung verringert die Amplitude des übertragenen Impulses und damit den Störabstand, was zur Folge hat, daß sehr leicht Jitter auftreten. Eine entsprechend hohe Treiberleistung hat jedoch nachteilhafterweise einen hohen Strombedarf zur Folge.

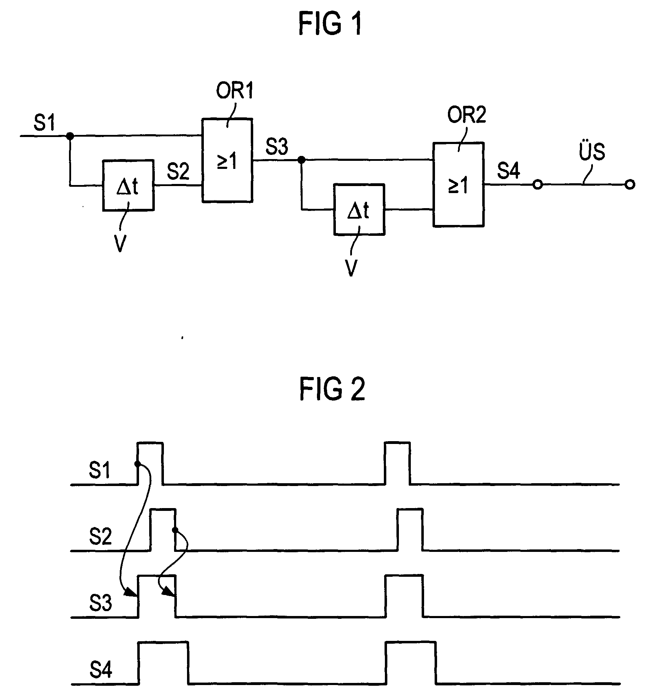

Eine andere Möglichkeit besteht darin, den zu übertragenden kurzen Impuls mit Hilfe einer mehrstufigen Verzögerungsschaltung, wie sie in Figur 1 gezeigt ist, zu verlängern. Dazu werden die zu übertragenden kurzen Impulse S1 einerseits direkt auf den ersten Eingang eines ODER-Gatters OR1 und andererseits über ein Verzögerungsglied V auf den zweiten Eingang des ODER-Glieds OR1 geführt. Am Ausgang des ODER-Glieds OR1 erhält man dann um die Verzögerungsdauer $\Delta$t verlängerte Impulse S3, die dann einer zweiten Verzögerungsstufe, welche im Aufbau der ersten Verzögerungsstufe entspricht, zugeführt wird, so daß am Ausgang des zweiten ODER-Glieds OR2 ein um die Verzögerungsdauer 2 * $\Delta$t verlängerter Impuls S4 zur Verfügung steht. Die hierzu entsprechenden Signalverläufe sind in Figur 2 gezeigt. Bei sehr kurzen Eingangsimpulsen S1 muß die Signalverarbeitung in mehreren Stufen erfolgen, da das ODER-Gatter bei Zeitverzögerungen $\Delta$t, die größer als die Impulsbreite sind, unerwünschte Doppelimpulse erzeugt. Nachteilhafterweise steigt mit jeder zusätzlich notwendigen Verzögerungsstufe die Verlustleistung und die benötigte Chipfläche an.

Aus der Druckschrift DE-4020719-A1 ist ein Verfahren zur Übertragung eines digitalen Datensignals mit einem Frequenzteiler und einem Frequenzvervielfacher, der ein Verzögerungsglied aufweist, bekannt.

Aus der Druckschrift JP-63-227113-A ist eine Schaltungsanordnung zur Übertragung von Impulsen mit einem Frequenzteiler, der zwei Flip-Flops aufweist, und mit einem Frequenzvervielfacher, der ein EXOR-Gatter aufweist, bekannt.

Eine Aufgabe der Erfindung ist es, unter Vermeidung der oben genannten Nachteile eine Schaltungsanordnung zur Übertragung von Impulsen über eine lange Übertragungsstrecke anzugeben.

Die Aufgabe wird erfindungsgemäß, durch eine Schaltungsanordnung mit den in Patentanspruch 1 angegebenen Merkmalen gelöst.

Die erfindungsgemäße Schaltungsanordnung zur Übertragung von Impulsen über eine Übertragungsstrecke weist einen Frequenzteiler auf, an dessen Eingang die zu übertragenden Impulse anliegen und dessen Ausgang mit der Übertragungsstrecke verbunden ist. Zusätzlich ist ein Frequenzvervielfacher vorgesehen, dessen Eingang mit der Übertragungsstrecke verbunden ist und an dessen Ausgang die übertragenen Impulse anliegen.

Der ein erstes Toggle-Flip-Flop aufweisende Frequenzteiler ist einfach realisierbar.

Durch die angegebene Schaltungsanordnung ist auf einfache Art und Weise am Ausgang der Schaltungsanordnung ein dem zu übertragenden Signal bezüglich Periodendauer und Impulsbreite identisches Ausgangssignal erzeugbar. Dazu weist der Frequenzteiler zusätzlich ein zweites Toggle-Flip-Flop auf, wobei am Takteingang des ersten Toggle-Flip-Flops die zu übertragenden Impulse anliegen und der Ausgang des ersten Toggle-Flip-Flops mit der Übertragungsstrecke verbunden ist. Weiterhin liegen am Takteingang des zweiten Toggle-Flip-Flops die zu übertragenden Impulse invertiert an. Hierzu ist den Toggle-Flip-Flops ein Verstärker mit komplementären Ausgängen vorgeschaltet. Der Ausgang des zweiten Toggle-Flip-Flops ist ebenfalls mit der Übertragungsstrecke verbunden. Der Frequenzvervielfacher weist ein EXOR-Gatter, auf dessen erster und zweiter Eingang mit der Übertragungsstrecke verbunden ist. Am Ausgang des EXOR-Gatters ist das übertragene Signal abgreifbar.

Der den Toggle-Flip-Flops vorgeschaltete Verstärker mit komplementären Ausgängen hat den Vorteil, daß die Toggle-Flip-Flops vom gleichen Flankensteuerungstyp sein können. Somit kann die Triggerung der beiden Toggle-Flip-Flops entweder auf der Low/High-Flanke (positiv flankengetriggert) oder auf der High/Low-Flanke (negativ flankengetriggert), jeweils für beide Toggle-Flip-Flops gleich, erfolgen. Dies hat zur Folge, daß die Schaltzeiten der beiden Toggle-Flip-Flops gleich sind und somit bei kurzen Impulsen die Impulsbreite an Ein- und Ausgang übereinstimmt.

Vorteilhafte Weiterbildungen der erfindungsgemäßen Schaltungsanordnung sind in den abhängigen Patentansprüchen angegeben.

Gemäß Patentanspruch 2 kann das Toggle-Flip-Flop durch ein einfaches einflanken-getriggertes D-Flip-Flop realisiert sein.

Die erfindungsgemäße Schaltungsanordnung ist vorteilhafterweise in einem integrierten Schaltkreis verwendbar.

Im folgenden werden zwei bevorzugte Ausführungsformen der erfindungsgemäßen Schaltungsanordnung anhand mehrerer Figuren weiter beschrieben.

Figur 1     zeigt eine Schaltung zur Impulsverbreitung gemäß dem Stand der Technik.

Figur 2     zeigt die zu Figur 1 korrespondierenden Signalverläufe.

Figur 3     zeigt eine erste erfindungsgemäße Ausführungsform der Schaltungsanordnung zur Übertragung von Impulsen.

Figur 4     zeigt die zu Figur 3 korrespondierenden Signalverläufe.

Figur 5     zeigt eine zweite erfindungsgemäße Ausführungsform der Schaltungsanordnung zur Übertragung von Impulsen.

Figur 6     zeigt die zu Figur 5 korrespondierenden Signalverläufe.

Auf die Figuren 1 und 2 wurde bereits in der Beschreibungseinleitung eingegangen. Zur Erläuterung wird deshalb auf die Beschreibungseinleitung verwiesen.

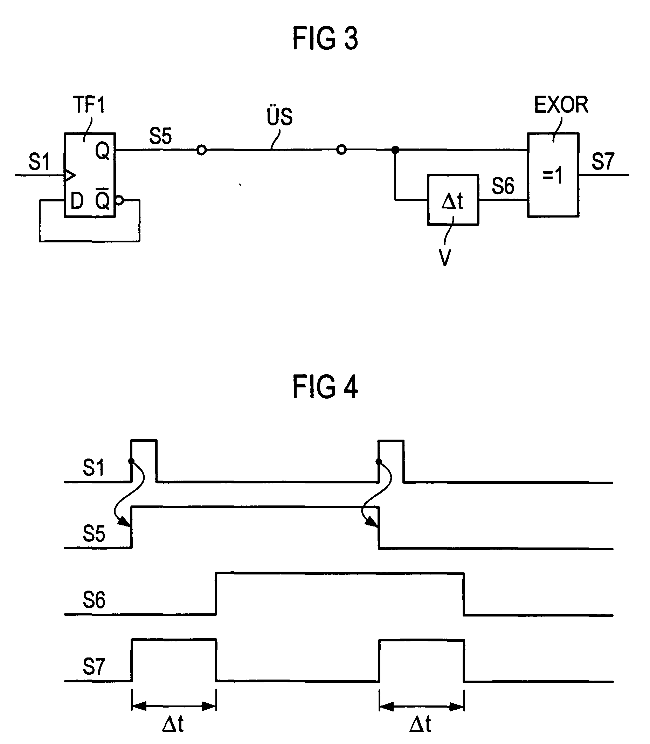

Die in Figur 3 gezeigte Schaltungsanordnung zur Impulsübertragung weist ein erstes Toggle-Flip-Flop TF1 auf, an dessen Takteingang die zu übertragenden Impulse S1 anliegen. Das Toggle-Flip-Flop TF1 in Figur 3 ist durch ein einflankengetriggertes D-Flip-Flop realisiert, dessen invertierender Ausgang $\overline{Q}$ mit dem D-Eingang des D-Flip-Flops verbunden ist.

Am Ausgang Q des Toggle-Flip-Flops TF1 liegt ein Signal S5 an, dessen Pegel mit jeder positiven Flanke des Eingangssignals S1 wechselt. Der Signalverlauf, des am Ausgang Q anliegenden Signals S5 ist in Figur 4 gezeigt. Der Ausgang Q des Toggle-Flip-Flops TF1 ist sowohl mit dem ersten Eingang eines exklusiven ODER-Gatters EXOR als auch über ein Verzögerungsglied V mit dem zweiten Eingang des exklusiven ODER-Gatters EXOR verbunden. Am Ausgang des EXOR-Gatters liegt das in Figur 4 gezeigte übertragene Signal S7 an. Der Impulsbreite des Signals S7 entspricht der Verzögerungsdauer Δt des Verzögerungsglieds V. Durch die erfindungsgemäße Schaltung wird nurmehr ein Signal über die Übertragungsstrecke ÜS übertragen, dessen Frequenz halb so groß, wie die Frequenz des zu übertragenden Signals S. Zusätzlich kommt vorteilhaft hinzu, daß die Impulsdauer des auf der Übertragungsstrecke ÜS übertragenen Signals S5 derart verlängert ist, daß sie der Periodendauer des am Eingang der Schaltungsanordnung anliegenden Signals S1 entspricht. Dies hat den positiven Effekt, daß die Tiefpaßwirkung der Übertragungsstrecke ÜD keinen negativen Einfluß mehr auf die Signalübertragungsqualität hat. Die Impulsbreite des am Ausgang des EXOR-Gatters anliegenden Signals S7 ist über das Verzögerungsglied V einstellbar. Somit besteht die Möglichkeit auf einfache Art und Weise die Pulsbreite des Signals S7, welches am Ausgang des EXOR-Gatters anliegt, an die Erfordernisse der -nicht gezeigten- nachfolgenden Schaltungen anpassen zu können.

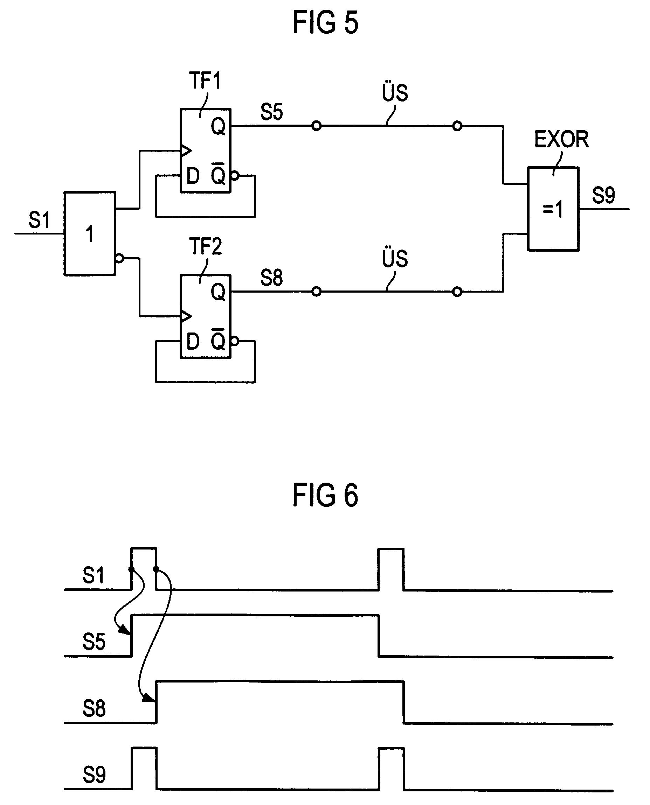

Bei der in Figur 5 gezeigten Schaltungsanordnung wird das zu übertragende Signal S1 einerseits im ersten Toggle-Flip-Flop TF1 in nicht invertierter Form und andererseits einem zweiten Toggle-Flip-Flop TF2 in invertierter Form, was durch ein vorgeschalteten Treiber mit Inverter geschieht, zugeführt. Die Ausgänge der beiden Toggle-Flip-Flops TF1 und TF2 sind jeweils mit der Übertragungsstrecke ÜS verbunden. Die Übertragungsstrecke ÜS weist im vorliegenden Fall zwei Leitungen auf. Die Übertragungsstrecke ÜS ist andererseits mit den beiden Eingängen des EXOR-Gatters verbunden. An dessen Ausgang ist das Signal S9 abgreifbar, das hinsichtlich Impulsbreite und Periodendauer dem Eingangssignal S1 gleich ist, abgreifbar. Beim Toggle-Flip-Flop TF1 wechselt des Ausgang den Pegel mit der steigenden Flanke des Eingangssignals S1, während beim Toggle-Flip-Flop TF2 der Ausgang den Pegel mit der fallenden Flanke des Eingangssignals S1 wechselt. Durch die exklusive ODER-Verknüpfung der beiden Ausgangssignale S5 und S8 der Toggle-Flip-Flops TF1 und TF2 ist ein exaktes Abbild des Eingangssignals S1 möglich.

Es ist auch möglich, nicht die Q-Ausgänge der Toggle-Flip-Flops TF1 und TF2 mit den Leitungen der Übertragungsstrecke zu verbinden, sondern stattdessen die $\overline{Q}$-Ausgänge dafür zu benutzen. Auch in diesem Fall sind dann die $\overline{Q}$-Ausgänge der Toggle-Flip-Flops TF1 und TF2 mit den D-Eingängen der Toggle-Flip-Flops TF1 und TF2 zu verbinden.

Die in den Figuren 3 und 5 gezeigten Ausführungsformen der erfindungsgemäßen Schaltungsanordnung zur Übertragung von Impulsen haben den Vorteil, daß keine Hochleistungtreiber erforderlich sind. Der Strombedarf kann bei einer Eingangssignalfrequenz von ca. 8 GHz um bis zu 20 mal geringer sein als der Strombedarf, wie er im Stand der Technik gemäß Beschreibungseinleitung notwendig ist.

Ein weiterer Vorteil besteht darin, daß keine Aneinanderreihung von Verzögerungsstufen notwendig ist. Die Schaltung ist damit weitgehend unabhängig von Impulsdauerschwankungen, die durch die Fertigung, Spannung und/oder Temperatur bedingt sind. Beim Stand der Technik, wie er in der Beschreibungseinleitung genannt ist, können die Schaltzeiten um bis zu 30 % schwanken. Mittels der erfindungsgemäßen Schaltungsanordnung können beliebig kurze Impulse über längere Strecken übertragen werden. Zudem ist die erfindungsgemäße Schaltungsanordnung jitterfrei.

Die Stromersparnis bei der erfindungsgemäßen Schaltungsanordnung wirkt sich um so positiver aus, je kleiner das Tastverhältnis beim zu übertragenden Signal S1 ist, also je kleiner das Verhältnis von Impuls- zu Pausedauer ist.

**Patentansprüche**

1. Schaltungsanordnung zur Übertragung von Impulsen über eine Übertragungsstrecke,

   mit einem Frequenzteiler, an dessen Eingang die zu übertragenden Impulse (S1) anliegen und dessen Ausgang mit der Übertragungsstrecke (ÜS) verbunden ist,
   mit einem Frequenzvervielfacher, dessen Eingang mit der Übertragungsstrecke (ÜS) verbunden ist und an dessen Ausgang die übertragenen Impulse (S7, S9) anliegen,
   bei der der Frequenzteiler ein erstes Toggle-Flip-Flop (TF1) und ein zweites Toggle-Flip-Flop (TF2), welches vom gleichen Flankensteuerungstyp wie das erste Toggle-Flip-Flop (TF1) ist, aufweist,
   wobei am Takteingang des ersten Toggle-Flip-Flops (TF1) die zu übertragenden Impulse (S1) anliegen und dessen Ausgang mit der Übertragungsstrecke (ÜS) verbunden ist,
   wobei am Takteingang des zweiten Toggle-Flip-Flops (TF2) die zu übertragenden Impulse (S1) invertiert anliegen, und dessen Ausgang mit der Übertragungsstrecke (ÜS) verbunden ist,
   bei der der Frequenzvervielfacher ein EXOR-Gatter (EXOR) aufweist, dessen erster und zweiter Eingang mit der Übertragungsstrecke (ÜS) verbunden ist, und
   wobei die zu übertragenden Impulse (S1) einem Verstärker mit komplementären Ausgängen zuführbar sind, wobei je ein Ausgang des Verstärkers mit je einem Takteingang der Toggle-Flip-Flops (TF1, TF2) verbunden ist.

2. Schaltungsanordnung nach Anspruch 1,

   bei der das Toggle-Flip-Flop (TF1) durch ein einflankengetriggertes D-Flip-Flop realisiert ist.

3. Verwendung der Schaltungsanordnung nach Anspruch 1 oder 2, in einem integrierten Schaltkreis.

# FIG 1

# FIG 2

# FIG 3

# FIG 4

# FIG 5

# FIG 6